# EUROPÄISCHE PATENTSCHRIFT

(11) **EP 1 362 398 B1**
(45) Veröffentlichungstag und Bekanntmachung des Hinweises auf die Patenterteilung: **14.07.2004**
(21) Anmeldenummer: 02711633.4
(22) Anmeldetag: 20.02.2002
(51) Int. Cl.: H02G 1/08, H01B 15/00

(54) **VERFAHREN ZUM ENTFERNEN EINER KABELSEELE AUS EINEM KABELMANTEL**
METHOD FOR REMOVING A CABLE CORE FROM A CABLE SHEATH
PROCEDE POUR RETIRER UNE AME DE CABLE D'UNE GAINE DE CABLE

(30) Priorität: 20.02.2001 WO PCT/AT01/00041; 28.06.2001 AT 10102001
(43) Veröffentlichungstag der Anmeldung: 19.11.2003
(73) Patentinhaber: Pichler, Alois, 3341 Ybbsitz (AT)
(72) Erfinder: Pichler, Alois, 3341 Ybbsitz (AT)
(74) Vertreter: Sonn & Partner Patentanwälte
(86) Internationale Anmeldenummer: PCT/AT2002/000056
(87) Internationale Veröffentlichungsnummer: WO 2002/067397

(56) Entgegenhaltungen:
- WO-A-82/00388
- US-A- 4 197 628

## Beschreibung

Die Erfindung betrifft ein Verfahren zum Entfernen einer Kabelseele aus einem Kabelmantel eines Kabels, welche Kabelseele eine Umhüllung aufweist, wobei an einem Ende des Kabels - dem sog. proximalen Kabelende - ein fließfähiges Medium zur Reibungsverringerung unter Druck in das Kabelrohr eingebracht wird und auf die Kabelseele an einem Ende des Kabels eine Zugkraft ausgeübt wird.

Die vorliegende Erfindung bezieht sich insbesondere auf Erdkabel für Telekommunikation, welche üblicherweise eine Kabelseele mit einer Vielzahl von Adern und wenigstens einer diese insgesamt umgebenden Umhüllung durch beispielsweise eine Papierwicklung aufweisen. Solche Kabel weisen außerdem meist einen starren Kabelmantel auf, ob gebildet durch eine Bleischicht, über welche eine Stahlschicht und zusätzlich eine Gewebe- oder Kunststoffumhüllung angeordnet sein kann. Die Erfindung bezieht sich aber ebenso auf in der Luft verlegte Kabel, z.B. an Hochspannungsmasten geführte Telekommunikationskabel.

Unter den Begriff des fließfähigen Mediums fallen dabei gasförmige, flüssige oder pastöse Medien oder Mischformen davon.

Die rasante technische Entwicklung auf dem Gebiet der Telekommunikation macht die Verwendung neuer Datenübertragungsleitungen, über welche höhere Datenraten übertragen werden können, erforderlich. Dabei kommen insbesondere dämpfungsarme Lichtwellenleiter zum Einsatz, über welche eine sehr hohe Bandbreite verlustarm übertragen werden kann. Es sind derzeit insbesondere nach der Liberalisierung des Telekommunikationswesens Bestrebungen im Gange, die alten Kabelnetze durch neue, leistungsfähigere Netze zu ersetzen.

Das Verlegen neuer Kabel im Erdboden durch aufwändige Erdarbeiten ist ebenso sehr teuer und erfordert auch Zeit. Dies ist beim derzeitigen Wettbewerb auf dem Telekommunikationssektor nicht tolerierbar.

Eine Methode zum Erneuern alter Kabel besteht darin, dass an den im Erdreich od. dgl. verlegten Kabeln Rohre befestigt werden, welche beim Herausziehen der bestehenden Kabel eingezogen werden und so an deren Stelle treten. In die Rohre werden danach beispielsweise Lichtwellenleiter verlegt. Nachteilig dabei ist, dass das umliegende Erdreich dem Kabel bzw. dem einzuziehenden Rohr einen enormen Widerstand entgegensetzt, so dass immer nur kurze Strecken ohne Erdarbeiten erneuert werden können.

Ein Verfahren zur Entfernung von Innenleitern aus Kabeln ist beispielsweise aus der WO 82/00388 A1 bekannt. Bei diesem bekannten Verfahren wird im Kabel in koaxialer Bauweise ein Fluid unter Druck eingebracht, um das Isolationsmaterial zwischen Innenleiter und Schirm zu zerbrechen und zu entfernen. Danach kann der Innenleiter leicht aus dem Kabel herausgezogen werden. Bei Telekommunikationskabeln mit einer Vielzahl von Innenleitern wird die Isolation durch Anwendung entsprechender Substanzen zersetzt, wodurch das Herausziehen der Innenleiter erleichtert wird. Darüber hinaus ist auch die Anwendung von Fräsern oder Schneidwerkzeugen vorgesehen, welche die Innenleiter des Kabels zerkleinern und entsprechend abführen. Diese bekannte Technik ist sehr kosten- und zeitaufwendig bzw. nicht allgemein für Telekommunikationskabel geeignet.

Ein Verfahren der gegenständlichen Art ist aus der als nächstliegender Stand der Technik anzusehenden US 4 197 628 A bekannt, wobei die Enden eines Kabelstückes freigelegt und um ein Ende des Kabels eine Hülse befestigt wird. Die Hülse wird durch eine Kappe dicht verschlossen und über ein Verbindungsstück an der Kappe ein Schmiermittel unter Druck in die Kabelseele eingebracht. Am gegenüberliegenden Ende des Kabels wird der Austritt des Schmiermittels abgewartet und danach das weitere Einbringen des Schmiermittels gestoppt. Nachdem sich eine üblicherweise außen an der Kabelseele befindliche Umhüllung mit dem Schmiermittel angesaugt hat, wird die Kabelseele ausgezogen. In der Praxis hat sich dieses Verfahren nicht durchsetzen können, da hiermit offenbar nur relativ kurze Kabelabschnitte ausziehbar sind.

Der vorliegenden Erfindung liegt daher die Aufgabe zugrunde, ein Verfahren der oben erwähnten Art zu schaffen, durch welches bestehende Kabel möglichst rasch und kostengünstig von der Kabelseele befreit werden können, um den dann als Rohr vorliegenden Kabelmantel für die Verlegung beispielsweise neuer Datenübertragungskabel, wie Lichtwellenleiter od. dgl., verwenden zu können, und andererseits die Rohstoffe der Kabelseele, insbesondere Kupfer, wieder verwerten zu können. Die Entfernung der Kabelseele soll über möglichst große Kabellängen möglich sein.

Die erfindungsgemäße Aufgabe wird dadurch gelöst, dass das fließfähige Medium gezielt in einen Ringraum zwischen der Innenseite des Kabelmantels und der Umhüllung der Kabelseele eingebracht wird.

Vorzugsweise wird zumindest während eines Teils des Schritts des Einbringens des fließfähigen Mediums der Ringraum oder das ganze Kabel an dem anderen Kabelende (dem sog. distalen Kabelende) nicht druckabgedichtet, so daß das flüssige Medium unter der Druckbeaufschlagung im wesentlichen im Ringraum zum distalen Kabelende fließt. Dieser Teilschritt wird daher im folgenden auch als "Fließschritt" bezeichnet.

Vorzugsweise wird zumindest während eines Teils des Schritts des Einbringens des fließfähigen Mediums der Ringraum oder das ganze Kabel am distalen Kabelende druckabgedichtet, so dass das flüssige Medium unter der Druckbeaufschlagung die Kabelseele komprimiert und/oder den Kabelmantel expandiert. Dieser Teilschritt wird daher im folgenden auch als "Kompressionsschritt" bezeichnet, wobei anzumerken ist, dass es auch beim Fließschritt zu einer (i.a. sogar größeren) Kompression kommt.

Besonders vorzugsweise werden im Rahmen des vorliegenden Verfahrens beide genannte Teilschritte ausgeführt, und zwar zunächst der Fließschritt und danach der Kompressionsschritt. Und zwar wird vorteilhaft der Fließschritt dann beendet und der Kompressionsschritt dann begonnen, wenn das fließfähige Medium am distalen Kabelende austritt.

Der Fließschritt dient in erster Linie dazu, das fließfähige Medium durch das ganze Kabel hindurch zu transportieren. Eine genauere Betrachtung zeigt, daß sich hierbei das fließfähige Medium hauptsächlich in längsverlaufenden Vertiefungen der Kabelseele fortbewegt, welche von der Aderstruktur der Kabelseele herrühren. Es kommt dabei nicht unbedingt zu einer Benetzung der Grenzfläche zwischen Umhüllung und Innenseite des Kabelmantels über den gesamten Umfang, sondern nur in kleineren, den genannten Vertiefungen entsprechenden Teilbereichen des Umfangs. Bei dem anschließenden Kompressionsschritt hingegen bewirkt der sich dann aufbauende höhere Schmiermitteldruck eine (weitergehende) Kompression der Kabelseele (und ev. bei Kabel mit elastischem Mantel, auch eine Expansion des Mantels), wodurch der Ringraum über den gesamten Umfang geweitet und hierdurch die gesamte Grenzfläche über den gesamten Umfang mit Schmiermittel benetzt wird.

Bei Ausgestaltungen des Verfahrens, bei welchen die Umhüllung der auszuziehenden Kabelseele als Wicklung ausgeführt ist, hat es sich als besonders vorteilhaft erwiesen, als proximales Kabelende dasjenige Kabelende zu verwenden, zu dem die Wicklung hinläuft. In anderen Worten soll in diesem Fall das fließfähige Medium gegen die Wickelrichtung in dem Ringraum vorwärts bewegt werden. Die gezielte Einbringung des fließfähigen Mediums in den Ringraum zwischen der Innenseite des Kabelmantels und der Umhüllung wird dadurch unterstützt, wenn das fließfähige Medium gegen eine allfällig vorhandene Wickelrichtung der Umhüllung der Adern eingebracht wird. Häufig besteht die Umhüllung der Adern des Kabels aus einem Band, insbesondere aus Papier, welches überlappend um die Adern gewickelt wird. Durch die Einbringung des fließfähigen Mediums gegen die Wickelrichtung dieser Umhüllung wird ein Eindringen des fließfähigen Mediums in das Innere der Kabelseele wirkungsvoll verhindert. Das Verfahren wird dadurch erleichert, dass das fließfähige Medium an demselben Ende des Kabels eingebracht wird wie jenes Ende des Kabels, an dem die Kabelseele herausgezogen wird (also am proximalen Ende). Dadurch brauchen die meisten für das Verfahren notwendigen Installationen nur an einem Ende des Kabels vorgenommen werden. Am gegenüberliegenden Ende des Kabels (also am distalen Ende) wird lediglich die Seelenabdichtung sowie ein Abschluss des Kabelendes vorgenommen. Hingegen wird beim Vorhandensein einer gewickelten Umhüllung der Seele, beispielsweise bei einer wendelförmig angeordneten Papierumhüllung, das Herausziehen der Seele in der Wickelrichtung unterstützt, da die Überlappungen der gewickelten Umhüllung nicht aufgefächert werden. Beim Herausziehen der Seele in der Wickelrichtung der Umhüllung wird ein Aufreißen der Umhüllung und ein Erschweren des Ausziehvorgangs somit verhindert. Alternativ dazu kann jedoch das fließfähige Medium auch am anderen Ende des Kabels, als jenem Ende des Kabels, an dem die Seele herausgezogen wird, eingebracht werden.

Im übrigen hat es sich bei solchen gewickelten Kabelseelen-Umhüllungen als besonders vorteilhaft erwiesen, die Kabelseele an demjenigen Kabelende herauszuziehen, zu dem die Wicklung hinläuft, also die Zugbewegung in der Wickelrichtung erfolgen zu lassen. Anders ausgedrückt ist es besonders vorteilhaft, als proximales Kabelende dasjenige zu verwenden, zu dem die Wicklung hinläuft, und nicht nur das Einbringen des fließfähigen Mediums, sondern auch das Herausziehen des Kabels an diesem proximalen Ende vorzunehmen.

Bei einer bevorzugten Ausgestaltung wird zumindest während eines Teils des Schritts des Einbringens des fließfähigen Mediums ein Druckgas, vorzugsweise Druckluft, in das von der Umhüllung umgebene Innere der Kabelseele eingeführt. Dadurch wird eine Kraft von innen nach außen auf die Umhüllung bewirkt, wodurch das Einfließen des fließfähigen Mediums in die Kabelseele wirkungsvoll unterbunden werden kann. Hierdurch wird ein von innen auf die Umhüllung wirkender Gegendruck gegen das unter Druck eingebrachte fließfähige Medium erzeugt, was die Abdichtung der Umhüllung nach innen verbessert. Grundsätzlich kann diese Maßnahme während des Fließschritts und/oder des Kompressionsschritts oder Teilen hiervon vorgenommen werden. Vorzugsweise wird die Maßnahme aber nur während des Kompressionsschritts vorgenommen, um einerseits die Ausbreitung des fließfähigen Mediums in Kabellängsrichtung,während des Fließschritts nicht zu behindern, andererseits aber einen hohen Druckaufbau während des Kompressionsschritts zu begünstigen. Der Druck des Druckgases ist i.a. deutlich niedriger als derjenige, mit dem das fließfähige Medium eingebracht wird, um dessen Fluß in Kabellängsrichtung sowie die Kompression der Kabelseele nicht übermäßig zu behindern.

Bei den genannten Ausgestaltungen mit als Wicklung ausgeführter Umhüllung, beispielsweise einer wendelförmig angeordneten Papierumhüllung, ist es im übrigen vorteilhaft, das Druckgas, vorzugsweise die Druckluft, in der Wickelrichtung der Umhüllung im Inneren der Kabelseele strömen zu lassen. Dies trägt günstig zu einer Abdichtung der Überlappungen der Wicklung bei und verhindert ein Aufreißen der Überlappungen der Umhüllung durch die Druckluft, wodurch ein erschwertes Ausziehen der Kabelseele aus dem Kabelrohr resultieren könnte.

Es ist vorteilhaft, dem Druckgas, insbesondere der Druckluft, ein flüssiges Medium, insbesondere ein Klebemittel, zuzusetzen, welches hierdurch in das Innere der Kabelseele eingebracht wird. Je nach Aufbau des Kabels kann ein Zusetzen eines flüssigen Mediums zum Druckgas bzw. zur Druckluft zu einer Art Verklebung der Überlappungen der Umhüllung führen, so dass ein Eindringen des fließfähigen Mediums in die Kabelseele noch weiter erschwert wird. Zur Befeuchtung des Druckgases können Wasser, Öl oder bestimmte Klebemittel verwendet werden, welche dem Druckgas in geringem Ausmaß beigemengt werden. Durch derartige Zusätze soll kein hydraulischer Druck aufgebaut werden, durch den der Ringraum reduziert würde, sondern eine Verklebung der Überlappungen der Wicklung untereinander erzielt werden. Dabei soll das durch die Kabelseele definierte Volumen immer noch komprimierbar bleiben, so dass durch das eingebrachte fließfähige Medium eine Reduktion des Volumens möglich bleibt und in der Folge eine Vergrößerung des Ringraumes zwischen der Umhüllung und der Innenseite des Kabelmantels erzielt werden kann. Als Klebemittel können Komponentenklebstoffe mit verspäteter Aushärtung, welche besonders dünnflüssig sein sollen, Anwendung finden.

Das gezielte Einbringen des fließfähigen Mediums in den Ringraum kann vorteilhafterweise dadurch erfolgen, dass das Innere der Kabelseele am proximalen Kabelende druckdicht gegenüber dem unter Druck in den Ringraum einzubringenden fließfähigen Medium abgeschlossen wird, so dass am proximalen Kabelende kein fließfähiges Medium in das Innere der Kabelseele eindringen kann. Das fließfähige Medium kann dann kabelstirnseitig eingepreßt werden; möglich ist aber z.B. auch ein Einpressen durch zurückgesetzte radiale Bohrungen im Kabelmantel.

Würde man das distale Kabelende einfach abschließen, ohne eine Kommunikation zwischen dem offenen Ende des Ringsraums und dem offenen Ende des Inneren der Kabelseele zu vermeiden, so könnte aus dem Ringraum austretendes fließfähiges Medium in das Innere der Kabelseele eintreten und in dieser zum proximale Ende zurückfließen. Um dies zu verhindern, wird vorzugsweise auch am distalen Kabelende das Innere der Kabelseele druckdicht gegenüber dem Ringraum abgeschlossen, so daß dort kein aus dem Ringraum austretendes fließfähiges Medium in das Innere der Kabelseele eindringen kann.

In beiden Fällen kann der druckdichte Abschluß des Inneren der Kabelseele gegenüber dem Ringraum vorteilhaft durch dichtes Aufbringen einer Seelenabdichtung auf das betreffende Ende der Kabelseele erzielt werden. Die Seelenabdichtung erfolgt dabei vorzugsweise durch eine elastische Umhüllung, welche über die freigelegten Adern aufgebracht wird. Beispielsweise kann dabei ein Vulkanisationsband verwendet werden, welches nach der Aufbringung eine selbständige Verklebung und somit eine dichte Umhüllung der Adern bewirkt.

Soll an dem jeweiligen Ende die Möglichkeit zur Einbringung von Druckluft oder zur Entlüftung des Inneren der Kabelseele geschaffen werden, so wird die Seelenabdichtung vorzugsweise mit einem Entlüftungsrohr ausgerüstet.

Dadurch, dass die Kabelseele, zumindest am proximalen Kabelende, umhüllt wird, kann kein fließfähiges Medium in das Innere der Kabelseele an deren Stirnseite eintreten. Im Gegensatz dazu wird das fließfähige Medium gezielt in den Ringraum zwischen der Innenseite des Kabelmantels und der Umhüllung eingebracht, wodurch auf die Kabelseele von außen eine Kraft einwirkt, welche zu deren Kompression führt, wodurch der Ringraum vergrößert, dadurch eine vollständige Benetzung des Ringraums begünstigt und die Reibung beim Ausziehen verringert wird. Dadurch können größere Längen alter Kabel auf einmal von der darin befindlichen Kabelseele befreit werden. Die erzielbaren Längen hängen unter Anderem von der Art und vom Durchmesser des Kabels, der Anzahl der Adern in der Seele, dem Druck, mit dem das fließfähige Medium eingebracht wird, dem verwendeten fließfähigen Medium sowie dem Kurvenverlauf des Kabels ab. Durch die Entfernung der Seele aus den Kabeln kann deren Material, meist Kupfer, wiederverwertet werden oder das dadurch entstehende leere Kabelrohr beispielsweise für die Verlegung neuer Drähte verwendet werden. Zusätzlich werden vom alten Kabel ausgehende Umweltrisiken verringert.

Dabei wird das fließfähige Medium vorzugsweise vor dem Herausziehen der Kabelseele in das Kabel eingebracht.

Zusätzlich kann das fließfähige Medium auch während des Herausziehens der Kabelseele in das Kabel eingebracht werden.

Wenn die Kabelseele an beiden Enden des Kabels vor dem Einbringen des fließfähigen Mediums mit einer Seelenabdichtung ausgerüstet wird, kann auch ein Eintritt des fließfähigen Mediums auch am distalen Kabelende vermieden werden.

Zur Überprüfung der Dichtheit und Durchlässigkeit des Kabels kann vor dem Einbringen des fließfähigen Mediums Druckluft in das Innere der Kabelseele gebracht werden. Zur Überprüfung der Dichtheit wird während des Einbringens der Druckluft der Druck auf der Seite der Einbringung der Druckluft gemessen. Aus den gemessenen Druckwerten kann ein Druckverlust, welcher durch eine undichte Stelle des Kabels hervorgerufen wird, festgestellt werden. In einem solchen Fall kann das Kabel vor der undichten Stelle zerschnitten werden und der Vorgang zur Entfernung der Seele aus dem Kabel für das neue Kabelstück vorgenommen werden.

Um die Durchlässigkeit des Kabels zu überprüfen, wird während des Einbringens der Druckluft der Druck auf der anderen Seite als jener der Einbringung der Druckluft gemessen. Dadurch können allfällige gequetschte Stellen des Kabels festgestellt werden. Sollte wegen einer sehr starken Quetschung ein Ausziehen ausnahmsweise nicht mehr möglich sein, so kann das Kabel vor dieser Quetschung abgeschnitten werden und danach das Verfahren zum Entfernen der Seele für das neue Kabelstück vorgenommen werden.

Während des Einbringens des fließfähigen Mediums ist das distale Ende vorzugsweise offen, so dass die durch das fließfähige Medium verdrängte Luft entweichen kann.

Während des Einbringens des fließfähigen Mediums wird die Kabelseele vorzugsweise gespannt, um ein axiales Verschieben derselben während des Einbringens des fließfähigen Mediums zu verhindern. Diese Vorspannung kann beispielsweise über ein Rohr, welches zur Einbringung der Druckluft in die Kabelseele dient, erfolgen, wobei das Rohr mit den Adern der Kabelseele verklebt wird und auf das Rohr eine Zugkraft bestimmten Ausmaßes ausgeübt wird.

Die Einbringung des fließfähigen Mediums wird vorzugsweise dann unterbrochen, wenn dieses am anderen Ende des Kabels austritt. Dadurch wird die Menge des fließfähigen Mediums auf das notwendige Volumen begrenzt.

Gemäß einer weiteren Ausgestaltung ist vorgesehen, dass nach Einbringung des fließfähigen Mediums beide Enden des Kabels luft- und druckdicht verschlossen werden, die Kabelseele mit einem Entlüftungsrohr versehen wird, und dass weiters auf das fließfähige Medium ein Druck ausgeübt wird. Durch diesen Verfahrensschritt wird aufgrund der bereits im Fließschritt auftretenden Kompression im Inneren der Kabelseele befindliche Luft durch das Entlüftungsrohr ausgepresst, wodurch sich der Durchmesser der Kabelseele verringert und somit eine Benetzung des Ringraums und hierdurch ein Herausziehen der Seele wesentlich erleichtert wird. Beim Kompressionsschritt ist es hingegen eher vorteilhaft, keine Entlüftung der Kabelseele zuzulassen und sogar noch Druckluft in diese einzubringen, da hier das Ausmaß des zu verdrängenden Luftvolumens relativ gering ist.

Um zu verhindern, dass sich die Kabelseele während des Ausziehvorganges verdreht und somit ihr Durchmesser vergrößert werden könnte, wird sie während des Ausziehvorganges vorzugsweise vor Verdrehung gesichert. Dies kann beispielsweise durch Ausleger auf einer üblicherweise verwendeten Manschette, über die Kabelseele aus dem Kabelrohr gezogen wird, erfolgen, welche eine Drehung der Seele verhindern.

Alternativ dazu könnte die Seele während des Ausziehvorganges auch vorzugsweise in eine allfällige Wendelrichtung der Adern verdreht werden, da dadurch der Durchmesser der Seele verringert wird und somit keine den Ausziehvorgang blockierende Wirkung eintritt.

Um das fließfähige Medium nach dem Ausziehvorgang weiter verwenden zu können, ist vorgesehen, dass dieses an jenem Ende des Kabels, an dem die Seele herausgezogen wird, abgestreift und gesammelt wird. Die Abstreifung erfolgt in einfacher Weise, beispielsweise durch einen elastischen Ring; der an der Umhüllung streift und so das fließfähige Medium abstreift, worauf es beispielsweise in einen Sammeltrichter und von dort in einen Behälter weiterfließt.

Um das fließfähige Medium zu einem besonders hohen Anteil wiederverwenden zu können, ist vorgesehen, dass an dem distalen Ende des Kabels während des Ausziehvorganges der Seele das fließfähige Medium durch das Kabel mitbefördert wird. Dies kann beispielsweise mit einem mit dem Ende der Seele verbundenen kolbenähnlichen Element geschehen, welches das fließfähige Medium durch den Kabelmantel zum proximalen Ende des Kabels befördert, wo es, wie bereits oben erwähnt, beispielsweise von einem Sammeltrichter aufgefangen und in einen Behälter weitergeleitet wird.

Um eine Beschädigung des Kabelmantels während des Ausziehvorganges zu vermeiden, wird der Kabelmantel an jenem Ende, an dem die Seele herausgezogen wird, vorzugsweise gegen Verdrehung gesichert. Die Sicherung gegen Verdrehung kann beispielsweise durch eine Manschette mit darin befindlichen Auslegern erfolgen.

Der Vorgang zur Entfernung der Seele aus dem Mantel kann dadurch unterstützt werden, dass während des Herausziehens der Seele auf das distale Ende der Seele eine Druckkraft ausgeübt wird. Dadurch kann die Zugkraft auf ein geringeres Ausmaß reduziert werden, wodurch die Gefahr des Zerreißens der Seele reduziert werden kann. Darüber hinaus kann die erreichbare Länge des Kabels, welche auf einmal von der Seele befreit wird, durch die Unterstützung des Ausziehvorganges erhöht werden.

Die unterstützende Druckkraft kann dabei über ein unter Druck auf das andere Ende des Kabels als jenes, von dem die Seele herausgezogen wird, eingebrachtes fließfähiges Mediums aufgebracht werden. In diesem Fall ist allerdings eine relativ große Menge an fließfähigem Medium erforderlich.

Gemäß einer weiteren Ausgestaltung wird die Zugkraft über eine Klemme, welche an der Seele befestigt wird, auf die Seele übertragen. Dies stellt eine einfache Methode zur Ausführung des erfindungsgemäßen Verfahrens dar.

Ebenso kann die Zugkraft auf die Seele über eine motorbetriebene Welle, um welche die Seele mehrmals umschlungen wird, aufgebracht werden. In diesem Fall wird eine ausreichende Länge der Seele freigelegt und mehrmals um die motorbetriebene Welle, Trommel od. dgl. geschlungen, sodass eine ausreichende Reibung resultiert und die Drehbewegung der Welle, Trommel od. dgl. auf eine Zugkraft auf die Seele übertragen werden kann.

Zur weiteren Erleichterung des Herausziehens der Seele bzw. zur Erzielung größerer Längen der herauszuziehenden Seele kann gemäß einem weiteren Verfahrensmerkmal das eingebrachte Gas und bzw. oder die eingebrachte Flüssigkeit ein zugesetztes Schmiermittel enthalten oder das fließfähige Medium selbst durch ein Schmiermittel gebildet werden. Das Schmiermittel kann dabei in flüssiger oder fester Form vorliegen. Bei Verwendung eines unter Druck in das Kabel eingebrachten Gases hat sich die Einbringung eines pulverförmigen Schmiermittels bewährt.

Wenn als Schmiermittel eine thixotrope Flüssigkeit verwendet wird, kann zusätzlich das unerwünschte Eindringen des fließfähigen Mediums in die Seele verhindert bzw. reduziert werden. Thixotrope Flüssigkeiten weisen eine von der Schubspannung abhängige Viskosität auf, wodurch ein Absetzen des fließfähigen Mediums verhindert werden kann. Thixotrope Eigenschaften weisen beispielsweise Schmierseifen oder Öle mit bestimmten Zusätzen auf. Neben der thixotropen Eigenschaft sollen die Schmiermittel bzw. die flüssigen Medien selbst möglichst kostengünstig und idealerweise auch biologisch abbaubar sein.

Das Auswechseln der alten Seele durch beispielsweise optische Datenübertragungskabel kann noch weiter erleichtert und beschleunigt werden, wenn mit dem Herausziehen der Seele zumindest ein neues Kabel od. dgl. in das Kabelrohr eingezogen wird.

Die vorliegende Erfindung wird an Hand von Ausführungsformen und diese illustrierende Abbildungen näher erläutert. Dabei zeigen:
Fig. 1 die Anwendung einer Ausführungsform des erfindungsgemäßen Verfahrens an einem Erdkabel in Seitenansicht;
Fig. 2a das Ende des Kabels gemäß Detail II in Fig. 1 während eines ersten Verfahrensschritts;
Fig. 2b das Ende des Kabels während der Einbringung des fließfähigen Mediums;
Fig. 2c das Ende des Kabels entsprechend dem Detail II gemäß Fig. 1 vor dem Beginn des Herausziehens der Seele;
Fig. 2d eine Seitenansicht auf das Ende des Kabels gemäß Fig. 2c;
Fig. 3a das andere Ende des Kabels entsprechend Detail III aus Fig. 1 zum Zeitpunkt des Verfahrens entsprechend Fig. 2a;
Fig. 3b das Ende des Kabels entsprechend Detail III aus Fig. 1 während des Einbringens des fließfähigen Mediums;
Fig. 3c das Ende des Kabels entsprechend Detail III gemäß Fig. 1 vor dem Herausziehen der Seele;
Fig. 4 eine perspektivische Ansicht einer Schelle zum Herausziehen der Seele mit einer Einrichtung zum Schutz vor Verdrehung der Seele.
Fig. 5 einen Längsschnitt durch ein Kabel mit gewickelter Umhüllung.

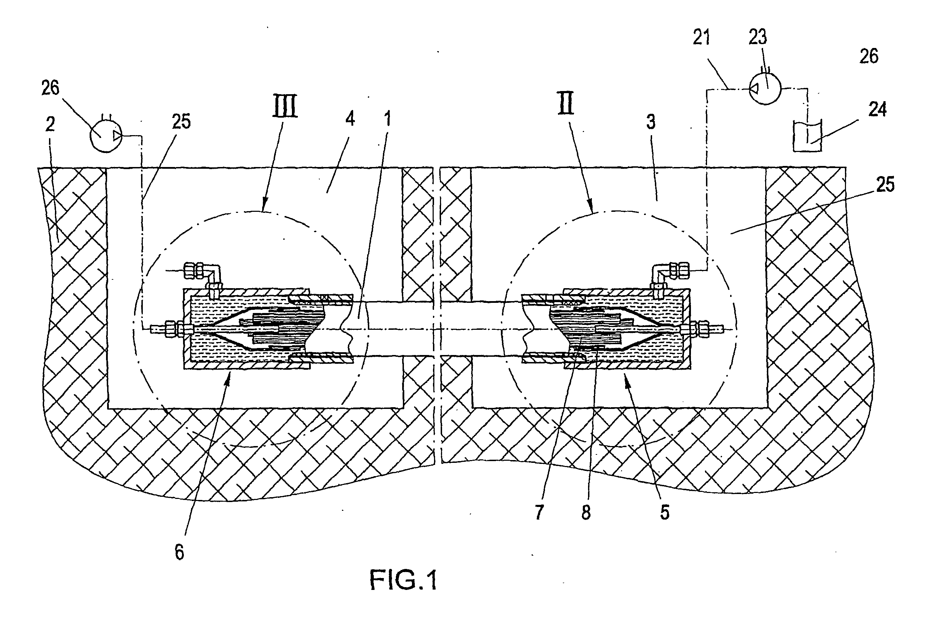

Fig. 1 zeigt ein Kabel 1, wie es beispielsweise in der Telekommunikation eingesetzt wurde bzw. wird, welches üblicherweise im Erdreich 2 verlegt wird. Zur Anwendung des erfindungsgemäßen Verfahrens wird an einer bestimmten Stelle, der sogenannten Startgrube 3, das Kabel 1 freigelegt und durchtrennt. In einem bestimmten Abstand von der Startgrube 3, beispielsweise 100 oder 200 m, wird eine sogenannte Zielgrube 4 errichtet und das Kabel 1 ebenfalls freigelegt und durchtrennt. Somit resultiert ein Stück Kabel 1 bestimmter Länge mit einem in der Startgrube 3 befindlichen Ende 5 sowie einem in der Zielgrube 4 befindlichen Ende 6.

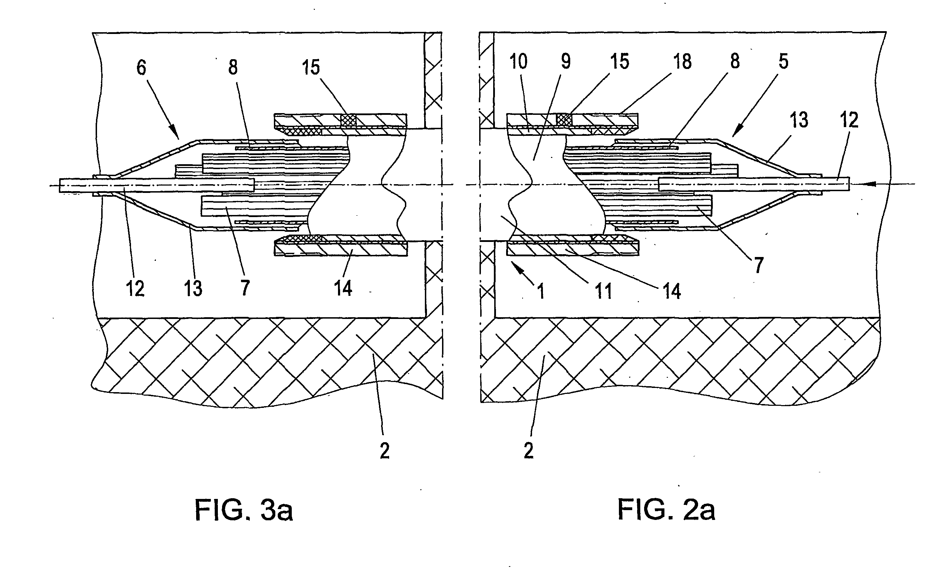

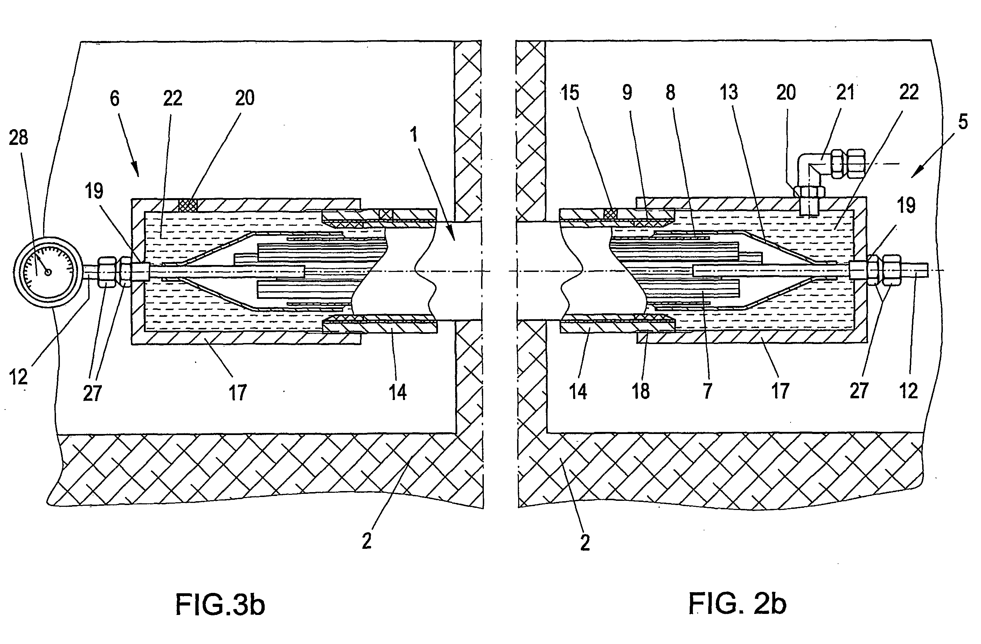

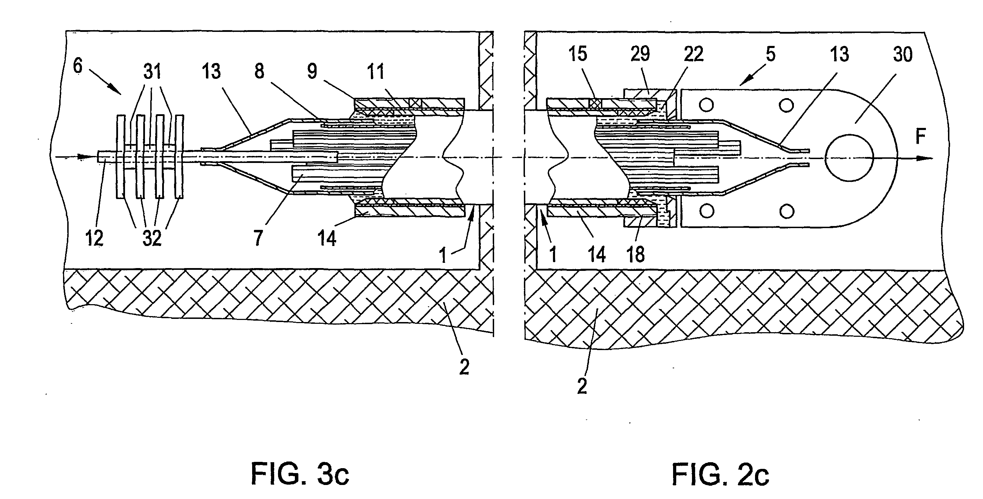

An Hand der Fig. 2 a bis 2d bzw. 3a bis 3c, welche die Details II bzw. III aus Fig. 1 in vergrößerter Darstellung während verschiedener Verfahrensschritte zeigen, wird eine Ausführungsform des erfindungsgemäßen Verfahrens in der Folge näher erläutert. Das Kabel weist üblicherweise eine Vielzahl von Adern 7, welche aus massivem Kupfer oder aus Kupferlitzen und einer Aderisolierung, z.B. aus Papier oder Kunststoff bestehen, auf. Darüber hinaus können Gruppen von Adern 7 von weiteren Isolierungen aus Papier oder Kunststoff umgeben sein. Schließlich ist die Gesamtheit der Adern 7 mit einer Umhüllung 8, vorzugsweise aus Papier oder Kunststoff, umgeben. Die Adern 7, die Umhüllung 8 und ggf. zusätzliche, weiter innen liegende Umhüllungen, Längsfäden, etc., bilden zusammen die Kabelseele. Zum Schutz der Kabelseele vor äußeren mechanischen und chemischen Einflüssen ist ein Innenmantel 9 angeordnet, welcher aus Blei bestehen kann. Über dem Innenmantel 9 ist üblicherweise eine weitere Mantelschicht 10 meist aus Stahl, insbesondere aus einem wendelförmig aufgebrachten Stahlblech, angeordnet, der dem Kabel 1 weiteren Schutz vor mechanischen Einflüssen bietet. Außen an der Stahlschicht 10 kann noch eine weitere Isolierung 11, beispielsweise aus in Öl getränktem Gewebe oder Kunststoff, vorgesehen sein, welche den Stahlmantel 10 vor Umwelteinflüssen schützt. Zusammen bilden die Mantelschichten 9 bis 11 den Kabelmantel. Die Kabelseele liegt mit der Umhüllung 8 im wesentlichen über den gesamten Umfang an dem Inneren des Kabelmantels an, z.T. umschließt Kabelmantel die Kabelseele sogar mit einer gewissen Spannung. Unter dem "Ringraum" zwischen Kabelseele und Kabelmantel ist also ein zwischen zwei Grenzflächen (dem Äußeren der Kabelseele und dem Inneren des Kabelmantels) liegender Raum zu verstehen, wobei die radiale Erstreckung des Ringraums aufgrund des direkten Kontakts der Grenzflächen beliebig klein sein kann. Das Ende des Kabels 1 in der Startgrube 3 bildet das sog. proximale Kabelende 5, das Ende des Kabels 1 in der Zielgrube 4 hingegen das sog. distale Kabelende 6. Am proximalen Kabelende 5 in der Startgrube 3 wird am Ende des im folgenden beschriebenen Verfahrens zum Herausziehen der Kabelseele eine Zugkraft auf diese ausgeübt.

Zur Einleitung des Verfahrens wird das proximale Kabelende 5, von welchem die Seele herausgezogen werden sollen, abgemantelt, indem über eine gewisse Länge der Kabelmantel, also die Isolierung 11, der Stahlmantel 10 sowie der Bleimantel 9 entfernt wird, so dass die Kabelseele, also die Adern 7 und die Umhüllung 8 über eine bestimmte Länge aus dem Kabel 1 ragen. Als folgender Verfahrensschritt, welcher in Fig. 2a deutlicher ersichtlich ist, wird ein Be- und Entlüftungsrohr 12 in die Kabelseele eingeschoben und dort mit ihr vorzugsweise verklebt. Danach wird das Ende der Kabelseele samt deren Umhüllung 8, durch eine Seelenabdichtung 13, beispielsweise ein selbstvulkanisierendes Gummiband, umhüllt, so dass ein vorzugsweise luft- und druckdichter Verschluss der Kabelseele am proximalen Kabelende 5 resultiert. Ein Vulkanisationsband hat den Vorteil, dass sich dieses automatisch mit der Umhüllung 8 bzw. dem Be- und Entlüftungsrohr 12 verklebt und somit ein dichter Verschluss realisiert werden kann. Anschließend wird über das proximale Kabelende 5 eine Hülse 14 geschoben, welche beispielsweise aus Metall besteht. Die Hülse 14 kann mit einer Bohrung 15 versehen sein, über welche Klebstoff eingepresst werden kann, so dass der Ringraum zwischen der Innenseite der Hülse 14 und der Außenseite des Kabelmantels mit dem Klebstoff ausgefüllt wird und eine zuverlässige Verbindung der Hülse 14 mit dem Kabelmantel erreicht wird. Als Klebstoff kann beispielsweise ein Zweikomponentenkleber verwendet werden, der eine rasche und zuverlässige Verbindung bewirkt. Die Hülse 14 dient zur Stabilisierung und zur Sicherung des Kabelmantels zur Vermeidung zur Beschädigung durch zu hohe Axialkräfte beim Einbringen des fließfähigen Mediums unter Druck bzw. beim späteren Herausziehen der Kabelseele aus dem Kabelmantel.

Gemäß Fig. 3a wird das distale Kabelende 6 in der Zielgrube 4 ebenso wie das proximale Kabelende 5 abgeschnitten, abgemantelt mit einem Be- und Entlüftungsrohr 12 versehen und schließlich die Kabelseele mit einer Seelenabdichtung 13 versehen. Abschließend wird ebenfalls eine Hülse 14 um den Kabelmantel gelegt und mit diesem verklebt.

Bei anderen (nicht gezeigten) Ausführungsformen wird am proximalen Kabelende 5 kein Be- und Entlüftungsrohr angeordnet. Die Seelenabdichtung 13 schließt aber auch hier das Innere der Kabelseele druckdicht gegen das Eindringen von fließfähigem Medium ab.

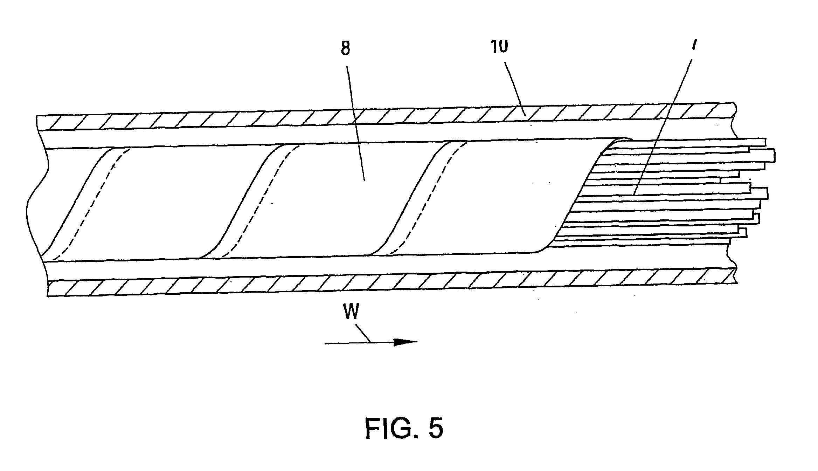

Gemäß Fig. 2b wird am proximalen Kabelende 5 des Kabels 1 schließlich über die Hülse 14 ein Deckel 17 angeordnet und fest mit dieser verbunden. Diese Verbindung geschieht vorzugsweise über ein Gewinde 18 an der Außenseite der Hülse 14, auf welches der Deckel 17 aufgeschraubt wird. Falls erforderlich, kann zusätzlich Dichtungsmaterial verwendet werden. Der Deckel 17 weist ggf. in der Mitte seiner Stirnseite eine Öffnung 19 auf, durch welche das Be- und Entlüftungsrohr 12 gesteckt werden kann. Am Mantel des zylinderförmigen Teils des Deckel 17 ist eine weitere Öffnung 20 vorgesehen, über die die Zuleitung 21 für das fließfähige Mediums bzw. Schmiermittel 22 verbunden wird. Wie aus Fig. 1 schematisch ersichtlich wird, ist die Zuleitung 21 mit einer Pumpe 23 verbunden, welche ihrerseits mit einem Behälter 24 für das Schmiermittel 22 verbunden ist. Im Falle einer wendelförmig um die Adern 7 gewickelten Umhüllung 8 wird das fließfähige Medium bzw. Schmiermittel 22 vorzugsweise gegen Wickelrichtung der Umhüllung 8 eingebracht (zur Definition der Wickelrichtung: siehe Fig. 5), so dass die Überlappungen der Wicklung durch die Fließrichtung des Schmiermittels 22 tendenziell geschlossen werden, wodurch ein Eindringen des fließfähigen Mediums bzw. Schmiermittels 22 aus dem Ringraum in die Kabelseele vermindert wird. Im Falle einer gewickelten Umhüllung 8 wird ferner die Kabelseele vorzugsweise in der Wickelrichtung ausgezogen, weil so die Überlappungen der Umhüllung 8 während des Ausziehvorgangs nicht aufgefächert werden und sich nicht gegen die Ausziehbewegung aufspreizen.

Das fließfähige Medium bzw. Schmiermittel 22 weist vorzugsweise eine geringere Dichte als das von der Umhüllung 8 umschlossene Volumen auf. Als fließfähige Medien kommen, wie bereits erwähnt, gasförmige, flüssige oder pastöse Medien oder Mischformen davon zur Anwendung. Das Be- und Entlüftungsrohr 12 wird mit dem Deckel 17 über entsprechende Überwurfmuttern 27 fixiert, wobei vor der Fixierung eine Zugkraft auf das Be- und Entlüftungsrohr 12 ausgeübt werden kann, so dass die Seele vorgespannt wird. Theoretisch kann die Öffnung 20 anstelle im Deckel 17 auch in der Hülse 14 bzw. einer entsprechenden Verlängerung der Hülse 14 angeordnet werden und von dort das Schmiermittel 22 eingebracht werden. Allerdings ist die Hülse 14 als Verschleißstück ausgebildet, weshalb die baulichen Vorkehrungen bevorzugt am Deckel 17 angeordnet werden, welcher mehrmals verwendet werden kann. Die Hülse 14 kann nach erfolgter Entfernung der Kabelseele aus dem Kabel 1 als Verbindungsstück zur erneuten Verbindung der Kabelstücke dienen, sofern das Kabel 1 wiederum als Rohr für beispielsweise Lichtwellenleiter od. dgl. verwendet wird.

Wie aus Fig. 3b für das distale Kabelende 6 ersichtlich, wird auch dort ein Deckel 17 über dem Kabelende 6 angeordnet, und das Be- und Entlüftungsrohr 12 mit entsprechenden Überwurfmuttern 24 am Deckel 17 fixiert. Die Öffnung 20 am Deckel 17 und das Be- und Entlüftungsrohr 12 werden vorerst freigelassen. Sofern eine Druckluftbeaufschlagung des Innern der Kabelseele durchgeführt werden soll, kann das Be- und Entlüftungsrohr 12 über eine Leitung 25 mit einem Kompressor 26 zur Erzeugung der Druckluft verbunden werden (Fig. 1).

Vor der Durchführung des eigentlichen Verfahrens kann über das Be- und Entlüftungsrohr 12 Druckluft in das Innere der Kabelseele eingeblasen und der Druck am anderen Ende des Kabels mit Hilfe eines Manometers 28 überwacht werden. Durch diese Messung erfolgt eine Prüfung des Kabels 1 auf Durchlässigkeit. Unter Zuhilfenahme des üblicherweise am Druckluftkompressor bzw. einer Druckluftverbindung 25 vorgesehenen Druckmessers kann weiters überprüft werden, ob das Kabel 1 dicht ist, da eine allfällige Bruchstelle durch einen unzureichenden Druckanstieg ermittelt werden könnte. Nach erfolgter Überprüfung des Kabels auf Dichtheit und Durchlässigkeit wird schließlich das Ende des Be- und Entlüftungsrohres 12 am proximalen Kabelende 5, beispielsweise mit einem Drehverschluss, der auf das Be- und Entlüftungsrohr 12 aufgeschraubt wird, abgeschlossen (nicht dargestellt).

Nun beginnt das eigentliche Verfahren, und zwar der sog. Fließschritt. Hierzu wird über die Zuleitung 21 das Schmiermittel 22 über die Öffnung 20 unter Druck eingebracht, wobei der Ringspalt am distalen Kabelende 6 offen ist. Das Schmiermittel 22 dringt gezielt in den Ringraum zwischen Bleimantel 9 und Umhüllung 8 ein und fließt darin in Kabellängsrichtung zum distalen Kabelende 6, ohne dass die Gefahr gegeben ist, dass das Schmiermittel 22 in die Kabelseele eindringt. Das Innere der Kabelseele kann bereits während des Fließschritts mit Druckluft beaufschlagt werden. Vorzugsweise wird bei einer gewickelten Umhüllung 7 die Druckluft vom distalen Kabelende 6 her eingeführt, damit die Druckluftströmung die Überlappungen der Wicklung tendenziell schließt, statt auffächert. Der Druck innerhalb der Kabelseele drückt die Überlappungen aufeinander und erschwert somit ein Eindringen des Schmiermittels 22 in das Innere der Kabelseele. Durch das Zusetzen eines flüssigen Mediums zu der eingebrachten Druckluft kann eine Verklebung der Überlappungen der Umhüllung 8 erzielt werden. Beim flüssigen Medium kann es sich um Wasser, Öl oder bestimmte Klebemittel handeln, welches in besonders geringem Ausmaß der Druckluft zugesetzt wird. Schließlich bahnt sich das Schmiermittel 22 den Weg durch den Ringraum zwischen Bleimantel 9 und Umhüllung 8 bis zum distalen Kabelende 6 . Sobald das Schmiermittel 22 aus der Öffnung 20 am Deckel 17 am distalen Kabelende 6 austritt, wird der Ringraum am distalen Kabelende 6 abgedichtet, und zwar durch Verschließen der Öffnung 20. Es beginnt nun der sog. Kompressionsabschnitt. Dabei dient das fortgesetzte Einpressen des Schmiermittels 22 nun nicht mehr in erster Linie dem Transport des Schmiermittels 22 durch den Ringraum längs des Kabels 1 (wobei es natürlich bereits zu einer Kompression der Kabelseele kommt), sondern es dient dem Druckaufbau im Ringraum, da das distale Ringraumende nun verschlossen ist. Während bei dem vorausgegangenen Fließschritt sich das Schmiermittel 22 bevorzugt nur in Längsvertiefungen der Umhüllung 8 fortbewegt (welche von der Aderstruktur der Kabelseele herrühren) und daher die Grenzfläche zwischen Umhüllung 8 und Innenseite des Kabelmantels nicht über den gesamten Umfang benetzt, kommt es nun zu einer (weitergehenden) Kompression der Kabelseele (und ev. zu einer Expansion des Kabelmantels, wenn dieser nicht völlig starr ist), wodurch das Schmiermittel 22 nun die besagte Grenzfläche über den gesamten Umfang benetzt. Wenn sich ein ausreichender Druck aufgebaut hat, wird der Einpressvorgang des Schmiermittels gestoppt. Die Druckausübung auf das Schmiermittel 22 wird dann beendet, wenn der Druck im Wesentlichen stabil bleibt und kein weiteres Komprimieren der Kabelseele möglich ist. Das Schmiermittel 22 kann dem fließfähigem Medium zugesetzt werden, oder das fließfähige Medium selbst ist durch das Schmiermittel 22 gebildet. Der auf das Schmiermittel 22 aufgebrachte Druck hängt vom Aufbau des Kabels 1, der Länge des Kabels 1 sowie verschiedenen anderen Faktoren ab. Schließlich eignen sich auch fließfähige Medien, bei denen das Gleitmittel mit einem Lösungsmittel verbunden ist, welches nach einiger Zeit verdunstet. Dadurch wird bewirkt, dass das Einbringen des flüssigen Mediums durch die Verdünnung mit dem Lösungsmittel erleichtert wird und schließlich nach Verdunsten des Lösungsmittels eine durch das dickflüssigere, zurückbleibende Gleitmittel verbesserte Gleitwirkung resultiert.

Schließlich wird gemäß Fig. 2c am proximalen Kabelende 5 der Deckel 17 abgeschraubt und das Be- und Entlüftungsrohr 12 entfernt. Danach wird über dem proximalen Kabelende 5 ein Abstreifer 29 für das Schmiermittel 22 befestigt, was beispielsweise unter Ausnützung des Gewindes 18 an der Hülse 14 erfolgen kann. Der Abstreifer 29 ist im Wesentlichen ringförmig ausgebildet und weist eine elastische, an der Umhüllung 8 streifende Kante auf, so dass das Schmiermittel 22 beim Herausziehen der Kabelseele von der Umhüllung 8 abgestreift wird und durch die Schwerkraft nach unten fließt, wo es durch einen entsprechenden Trichter und ein entsprechendes Behältnis (nicht dargestellt) gesammelt werden kann und in hohem Maß wieder verwendet werden kann. Schließlich wird über die Seelenabdichtung 13 eine Klemme 30 fest verbunden, und auf diese Klemme 30 eine Zugkraft in Richtung des Pfeiles F ausgeübt.

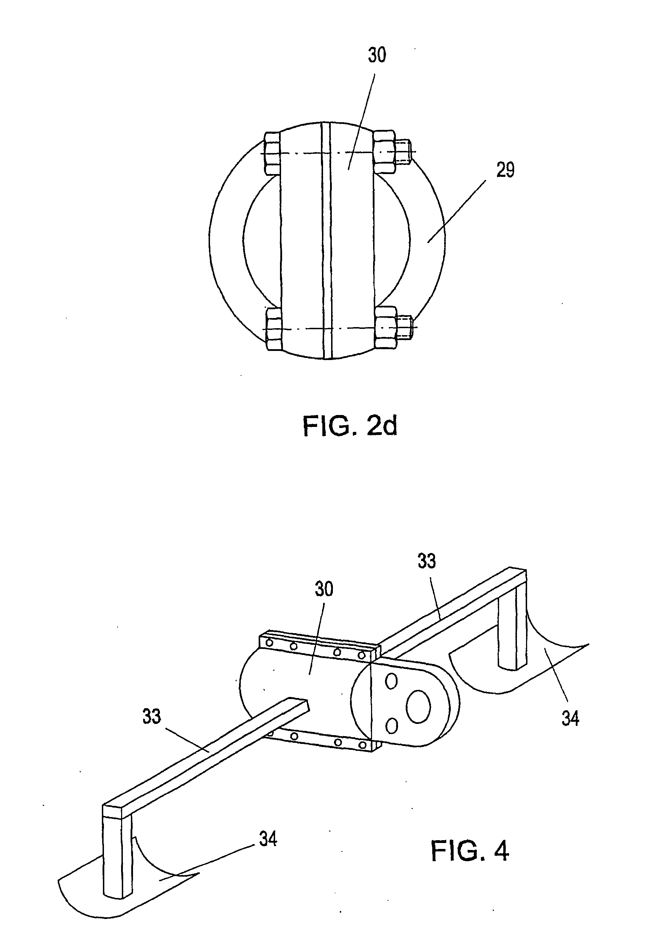

Am distalen Ende 6 des Kabels 1 wird der Deckel 17 ebenfalls entfernt. Mit der Seelenabdichtung 13 am distalen Kabelende 6 können ein oder mehrere kolbenartige Elemente, beispielsweise durch Abstandselemente 31 in Abstand gehaltene Scheiben 32 angeordnet werden, welche beim Herausziehen der Kabelseele aus dem Kabel 1 das Schmiermittel 22 mitnehmen, so dass dieses am Ende 5 des Kabels 1 austritt und durch den Abstreifer 29 abgestreift wird, wo es gesammelt und wiederverwertet werden kann. Während des Ausziehens der Kabelseele aus dem Kabelmantel ist es zweckmäßig, die Kabelseele vor Verdrehung zu sichern. Das kann auf verschiedene Weise geschehen, beispielsweise durch Arme 33 oder Ausleger, welche an der Klemme 30 befestigt sind und so eine Verdrehung unmöglich machen. Zusätzlich können an den Armen 33 Gleitkufen 34 befestigt sein, welche am Erdboden während des Ausziehvorganges der Seele gleiten (s. Fig. 4). Weiters ist es zweckmäßig, auch das Kabel 1 vor Verdrehung zu sichern, was durch an der Hülse 14 angeordnete Arme oder Ausleger, in ähnlicher Weise wie in Fig. 4 gezeigt, realisiert werden kann. Gleichzeitig mit dem Ausziehen der Kabelseele kann ein neues Kabel, beispielsweise ein moderner Lichtwellenleiter od. dgl., mit dem Ende der Kabelseele am distalen Kabelende 6 verbunden und somit gleichzeitig mit dem Ausziehvorgang in den nun ein Rohr bildenden Kabelmantel eingezogen werden.

Um eine Beschädigung der Umhüllung 8 am proximalen Kabelende 5 zu vermeiden, wird die Kabelseele vorzugsweise über eine bestimmte Länge gerade aus dem Kabelmantel herausgezogen, bevor eine gezielte Richtungsänderung vorgenommen wird, beispielsweise um die Kabelseele aus der Startgrube 3 auf eine entsprechende Aufwickeleinrichtung (nicht dargestellt) zu bringen.

In Fig. 5 ist die Definition der "Wickelrichtung" der Umhüllung 8 anhand eines Längsschnitts veranschaulicht. Beim Wickeln eines Bandes um das Bündel der Adern 7 ergeben sich im Längsschnitt schuppenartige Überlappungen, wobei immer die zuerst gelegte Windung von der darauffolgenden Windung teilweise überdeckt wird. Die Wickelrichtung verläuft längs zum Kabel 1 und ist diejenige Richtung, in der die Wicklung bei der Herstellung fortschreitet. In Fig. 5 ist die Wickelrichtung durch den Pfeil W angegeben. Die bevorzugte Richtung für das Einbringen des Schmiermittels ist entgegen der Richtung des Pfeiles W, sodass durch den Fluss des Schmiermittels die Überlappungen der bandförmigen Umhüllung 8 geschlossen werden. Die bevorzugte Richtung für das Einbringen der Druckluft in das von der Umhüllung 8 umgebene Innere der Kabelseeele ist in Wickelrichtung in Richtung des Pfeiles W, da dadurch die Überlappungen der bandförmigen Umhüllung 8 eher geschlossen als geöffnet werden. Schließlich ist die bevorzugte Richtung für das Ausziehen der Kabelseele wieder in Richtung des Pfeiles W der Wicklung gegeben, da dadurch die Überlappungen der bandförmigen Umhüllung 8 während der Ausziehbewegung geschlossen werden.

Die Abbildungen zeigen nur eine beispielhafte Ausführungsform der Erfindung. Konstruktive Abänderungen und Unterschiede der Verfahrensabläufe sind im Rahmen der Ansprüche möglich.

## Patentansprüche

1. Verfahren zum Entfernen einer Kabelseele aus einem Kabelmantel eines Kabels, welche Kabelseele eine Umhüllung (8) aufweist, wobei an einem Ende des Kabels - dem sog. proximalen Kabelende - ein fließfähiges Medium (22) zur Reibungsverringerung unter Druck in den als Kabelrohr vorliegenden Kabelmantel eingebracht wird und auf die Kabelseele an einem Ende des Kabels eine Zugkraft ausgeübt wird, **dadurch gekennzeichnet, dass** das fließfähige Medium (22) gezielt in einen Ringraum zwischen der Innenseite des.Kabelmantels und der Umhüllung (8) der Kabelseele eingebracht wird.

2. Verfahren nach Anspruch 1, **dadurch gekennzeichnet, dass** zumindest während eines Teils des Schritts des Einbringens des fließfähigen Mediums der Ringraum oder das ganze Kabel am distalen Kabelende nicht druckabgedichtet wird, so dass das flüssige Medium unter der Druckbeaufschlagung im wesentlichen im Ringraum zum distalen Kabelende fließt, wodurch ein sog. Fließschritt gebildet wird.

3. Verfahren nach Anspruch 1 oder 2, **dadurch gekennzeichnet, dass** zumindest während eines Teils des Schritts des Einbringens des fließfähigen Mediums der Ringraum oder das ganze Kabel am distalen Kabelende druckabgedichtet wird, so dass das flüssige Medium unter der Druckbeaufschlagung die Kabelseele komprimiert und/oder den Kabelmantel expandiert, wodurch ein sog. Kompressionsschritt gebildet wird.

4. Verfahren nach Ansprüchen 2 und 3, **dadurch gekennzeichnet, dass** zunächst der Fließschritt und danach der Kompressionsschritt ausgeführt wird.

5. Verfahren nach Anspruch 4, **dadurch gekennzeichnet, dass** nach Austritt des fließfähigen Mediums am distalen Kabelende der Fließschritt beendet und der Kompressionsschritt begonnen wird.

6. Verfahren nach einem der Ansprüche 1 bis 5, **dadurch gekennzeichnet, dass** bei einem Kabel, bei dem die Umhüllung der Kabelseele als Wicklung ausgeführt ist, als proximales Kabelende dasjenige Kabelende verwendet wird, zu dem die Wicklung hin läuft, so dass das fließfähige Medium gegen die Wickelrichtung in dem Ringraum vorwärts bewegt wird.

7. Verfahren nach einem der Ansprüche 1 bis 6, **dadurch gekennzeichnet, dass** bei einem Kabel, bei dem die Umhüllung der Kabelseele als Wicklung ausgeführt ist, die Kabelseele an denjenigem Kabelende herausgezogen wird, zu dem die Wicklung hin läuft, also die Zugbewegung in der Wickelrichtung erfolgt.

8. Verfahren nach einem der Ansprüche 1 bis 7, **dadurch gekennzeichnet, dass** zumindest während eines Teils des Schritts des Einbringens des fließfähigen Mediums, insbesondere während eines Kompressionsschritts, ein Druckgas, insbesondere Druckluft, in das von der Umhüllung umgebene Innere der Kabelseele eingeführt wird, wodurch ein von Innen auf die Umhüllung wirkenden Gegendruck gegen das unter Druck eingebrachte fließfähige Medium erzeugt wird.

9. Verfahren nach Anspruch 8, **dadurch gekennzeichnet, dass** bei einem Kabel, bei dem die Umhüllung der Kabelseele als Wicklung ausgeführt ist, das Druckgas an demjenigen Kabelende eingeführt wird, von dem die Wicklung weg läuft, so dass das Druckgas in der Wickelrichtung im Inneren der Kabelseele strömt.

10. Verfahren nach Anspruch 8 oder 9, **dadurch gekennzeichnet, dass** dem Druckgas ein flüssigen Medium, insbesondere ein Klebemittel, zugesetzt und somit in das Innere der Kabelseele eingebracht wird.

11. Verfahren nach einem der Ansprüche 1 bis 10, **dadurch gekennzeichnet, dass** das Innere der Kabelseele am proximalen Kabelende druckdicht gegenüber dem unter Druck in den Ringraum einzubringenden fließfähigen Medium abgeschlossen wird, so dass am proximalen Kabelende kein fließfähiges Medium in das Innere der Kabelseele eindringen kann.

12. Verfahren nach einem der Ansprüche 1 bis 11, **dadurch gekennzeichnet**, das Innere der Kabelseele am distalen Kabelende druckdicht gegenüber dem Ringraum abgeschlossen wird, so dass am distalen Kabelende kein aus dem Ringraum austretendes fließfähiges Medium in das Innere der Kabelseele eindringen kann.

13. Verfahren nach Anspruch 11 oder 12, **dadurch gekennzeichnet, dass** der druckdichte Abschluß des Inneren der Kabelseele gegenüber dem Ringraum durch dichtes Aufbringen einer Seelenabdichtung auf das Ende der Kabelseele erzielt wird.

14. Verfahren nach Anspruch 13, **dadurch gekennzeichnet, dass** die Seelenabdichtung zur Entlüftung des Inneren der Kabelseele mit einem Entlüftungsrohr ausgerüstet ist.

15. Verfahren nach einem der Ansprüche 1 bis 14, **dadurch gekennzeichnet, dass** das fließfähige Medium vor dem Herausziehen der Seele in das Kabelrohr eingebracht wird.

16. Verfahren nach Anspruch 15, **dadurch gekennzeichnet, dass** das fließfähige Medium während des Herausziehens der Kabelseele in das Kabel eingebracht wird.

17. Verfahren nach einem der Ansprüche 1 bis 16, **dadurch gekennzeichnet, dass** das Innere der Kabelseele an beiden Enden des Kabels vor dem Einbringen des fließfähigen Mediums druckdicht gegenüber dem Ringraum abgeschlossen wird.

18. Verfahren nach einem der Ansprüche 1 bis 17, **dadurch gekennzeichnet, dass** vor dem Einbringen des fließfähigen Mediums mit Druckluft die Dichtheit des Kabels überprüft wird.

19. Verfahren nach einem der Ansprüche 1 bis 18, **dadurch gekennzeichnet, dass** vor dem Einbringen des fließfähigen Mediums mit Druckluft die Durchlässigkeit des Kabels überprüft wird.

20. Verfahren nach einem der Ansprüche 1 bis 19, **dadurch gekennzeichnet, dass** die Kabelseele während des Einbringens des fließfähigen Mediums gespannt wird.

21. Verfahren nach einem der Ansprüche 1 bis 20, **dadurch gekennzeichnet, dass** die Kabelseele während des Ausziehvorganges vor Verdrehung gesichert wird.

22. Verfahren nach einem der Ansprüche 1 bis 21, **dadurch gekennzeichnet, dass** die Kabelseele während des Ausziehvorganges vorzugsweise in eine allfällige Wendelrichtung von in der Kabelseele befindlichen Drähten verdreht wird.

23. Verfahren nach einem der Ansprüche 1 bis 22, **dadurch gekennzeichnet, dass** an jenem Ende des Kabels, an dem die Kabelseele herausgezogen wird, während des Ausziehvorganges das fließfähige Medium abgestreift und gesammelt wird.

24. Verfahren nach einem der Ansprüche 1 bis 23, **dadurch gekennzeichnet, dass** an dem anderen Ende des Kabels, als jenes Ende, an dem die Kabelseele herausgezogen werden, während des Ausziehvorganges das fließfähige Medium durch die Kabelseele mitbefördert wird, beispielsweise mit einem mit dem Ende der Kabelseele verbundenen kolbenähnlichen Element.

25. Verfahren nach einem der Ansprüche 1 bis 24, **dadurch gekennzeichnet, dass** der Kabelmantel während des Ausziehvorganges an jenem Ende, an dem die Kabelseele herausgezogen wird, gegen Verdrehung gesichert wird.

26. Verfahren nach einem der Ansprüche 1 bis 25, **dadurch gekennzeichnet, dass** während des Ausziehvorganges zur Unterstützung des Ausziehens der Kabelseele auf das der Zugseite abgewandte Ende der Kabelseele eine Druckkraft ausgeübt wird.

27. Verfahren nach Anspruch 26, **dadurch gekennzeichnet, dass** die Druckkraft über ein unter Druck auf das der Zugseite abgewandte Ende der Kabelseele eingebrachtes fließfähiges Ausdrückmedium aufgebracht wird.

28. Verfahren nach einem der Ansprüche 1 bis 27, **dadurch gekennzeichnet, dass** die Zugkraft über eine Klemme, welche an der Kabelseele befestigt wird, auf die Kabelseele übertragen wird.

29. Verfahren nach einem der Ansprüche 1 bis 28, **dadurch gekennzeichnet, dass** die Zugkraft auf die Kabelseele über eine motorbetriebene Welle, um welche die Kabelseele mehrmals umschlungen wird, aufgebracht wird.

30. Verfahren nach einem der Ansprüche 1 bis 29, **dadurch gekennzeichnet, dass** das eingebrachte, fließfähige Medium ein zugesetztes Schmiermittel enthält.

31. Verfahren nach einem der Ansprüche 1 bis 30, **dadurch gekennzeichnet, dass** das fließfähige Medium selbst durch ein Schmiermittel gebildet wird.

32. Verfahren nach Anspruch 30 oder 31, **dadurch gekennzeichnet, dass** das Schmiermittel durch eine thixotrope Flüssigkeit gebildet wird.

33. Verfahren nach einem der Ansprüche 1 bis 32, **dadurch gekennzeichnet, dass** gleichzeitig mit dem Herausziehen der Seele zumindest ein neues Kabel in den Kabelmantel eingezogen wird.

## Claims

1. A method for removing a cable core from a cable sheath of a cable, which cable core comprises an envelope, wherein, at an end of the cable - the so-called proximal cable end - a flowable medium is introduced under pressure into the cable tube so as to reduce friction, and a tensile force is exerted on the cable core at an end of the cable, **characterised in that** the flowable medium is introduced precisely targeted into an annular space between the inner side of the cable sheath and the envelope of the cable core.

2. A method according to claim 1, **characterised in that** at least during part of the step of introducing the flowable medium, the annular space or the entire cable is not pressure-sealed at the distal cable end, so that liquid medium under the action of pressure flows substantially in the annular space to the distal cable end, whereby a so-called flow step is formed.

3. A method according to claim 1 or 2, **characterised in that** at least during part of the step of introducing the flowable medium, the annular space or the entire cable is pressure-sealed at the distal end so that the liquid medium under the action of pressure compresses the cable core and/or expands the cable sheath, whereby a so-called compression step is formed.

4. A method according to claim 2 or 3, **characterised in that** at first the flow step and subsequently the compression step is carried out.

5. A method according to claim 4, **characterised in that** after the emergence of the flowable medium at the distal cable end, the flow step is terminated and the compression step is started.

6. A method according to any one of claims 1 to 5, **characterised in that** in a cable in which the envelope of the cable core is designed as a winding, that cable end is used as the proximal cable end towards which the winding proceeds, so that the flowable medium is moved forwards in the annular space in counter-direction to the winding direction.

7. A method according to any one of claims 1 to 6, **characterised in that** in a cable in which the envelope of the cable core is designed as a winding, the cable core is pulled out at that cable end towards which the winding proceeds, i.e. that the pulling movement is effected in the winding direction.

8. A method according to any one of claims 1 to 7, **characterised in that** at least during part of the step of the introduction of the flowable medium, in particular during a compression step, a compressed gas, in particular compressed air, is introduced into the interior of the cable core surrounded by the envelope, whereby a counter-pressure acting on the envelope from within is produced against the flowable medium that is introduced under pressure.

9. A method according to claim 8, **characterised in that** in a cable in which the envelope of the cable core is designed as a winding, the compressed gas is introduced at that cable end from which the winding extends so that the compressed gas flows in the interior of the cable core in the winding direction.

10. A method according to claim 8 or 9, **characterised in that** a liquid medium, in particular an adhesive, is admixed to the compressed gas and thus is introduced into the interior of the cable core.

11. A method according to any one of claims 1 to 10, **characterised in that** the interior of the cable core at the proximal cable end is closed pressure-sealed relative to the flowable medium to be introduced under pressure into the annular space, so that flowable medium cannot penetrate into the interior of the cable core at the proximal cable end.

12. A method according to any one of claims 1 to 11, **characterised in that** the interior of the cable core at the distal cable end is closed pressure-sealed relative to the annular space so that at the distal cable end flowable medium emerging from the annular space cannot enter into the interior of the cable core.

13. A method according to claim 11 or 12, **characterised in that** the pressure-sealed closure of the interior of the cable core relative to the annular space is achieved by sealing by attaching a core sealing to the end of the cable core.

14. A method according to claim 13, **characterised in that** the core sealing is equipped with a venting tube for venting the interior of the cable core.

15. A method according to any one of claims 1 to 14, **characterised in that** the flowable medium is introduced into the cable tube before the core is pulled out.

16. A method according to claim 15, **characterised in that** the flowable medium is introduced into the cable while the cable core is being pulled out.

17. A method according to any one of claims 1 to 16, **characterised in that** the interior of the cable core at both ends of the cable is closed in a pressure-sealed manner relative to the annular space before the flowable medium is introduced.

18. A method according to any one of claims 1 to 17, **characterised in that** the tightness of the cable is checked with compressed air before the flowable medium is introduced.

19. A method according to any one of claims 1 to 18, **characterised in that** the permeability of the cable is checked with compressed air before the flowable medium is introduced.

20. A method according to any one of claims 1 to 19, **characterised in that** the cable core is tensioned while the flowable medium is being introduced.

21. A method according to any one of claims 1 to 20, **characterised in that** the cable core is secured against rotation during the extraction procedure.

22. A method according to any one of claims 1 to 21, **characterised in that** during the extraction procedure, the cable core preferably is rotated into a possibly existing helical direction of wires present in the cable core.

23. A method according to any one of claims 1 to 22, **characterised in that** at that end of the cable at which the cable core is being pulled out, the flowable medium is stripped off during the pull-out procedure and collected.

24. A method according to any one of claims 1 to 23, **characterised in that** at the other end of the cable than that end at which the cable core is being pulled out, the flowable medium is entrained by the cable core during the extraction procedure, e.g. by a piston-like element connected to the end of the cable core.

25. A method according to any one of claims 1 to 24, **characterised in that** during the extraction procedure, the cable sheath is secured against rotation at that end at which the cable core is pulled out.

26. A method according to any one of claims 1 to 25, **characterised in that** during the extraction procedure, to assist the extraction of the cable core, a pressure force is exerted on that end of the cable core which faces away from the pulling side.

27. A method according to claim 26, **characterised in that** the pressure force is applied via a flowable pressing-out medium introduced under pressure to the end of the cable core that faces away from the pull side.

28. A method according to any one of claims 1 to 27, **characterised in that** the pulling force is transmitted to the cable core via a clamp which is fastened to the cable core.

29. A method according to any one of claims 1 to 28, **characterised in that** the pulling force is applied to the cable core via a motor-driven shaft about which the cable core is wound several times.

30. A method according to any one of claims 1 to 29, **characterised in that** the introduced, flowable medium contains an admixed lubricant.

31. A method according to any one of claims 1 to 30, **characterised in that** the flowable medium itself is formed by a lubricant.

32. A method according to claim 30 or 31, **characterised in that** the lubricant is formed by a thixotropic liquid.

33. A method according to any one of claims 1 to 32, **characterised in that** at least one new cable or the like is pulled into the cable sheath simultaneously with the extraction of the core.

## Revendications

1. Procédé destiné à retirer une âme de câble hors d'une gaine de câble, laquelle âme de câble comporte une chemise, un milieu fluide étant introduit sous pression dans le tube de câble au niveau d'une extrémité du câble - dite extrémité proximale du câble - afin de réduire le frottement et une force de traction étant exercée sur l'âme du câble au niveau d'une extrémité du câble, **caractérisé en ce que** le milieu fluide est introduit méthodiquement dans un espace annulaire entre la face intérieure de la gaine du câble et la chemise de l'âme du câble.

2. Procédé selon la revendication 1, **caractérisé en ce que**, au moins pendant une partie de l'étape d'introduction du milieu fluide, l'espace annulaire ou la totalité du câble n'est pas obturé de manière étanche à la pression au niveau de l'extrémité distale du câble, de telle sorte que le milieu fluide circule sous l'effet de la pression appliquée sensiblement dans l'espace annulaire vers l'extrémité distale du câble, moyennant quoi on obtient une étape dite étape de flux.

3. Procédé selon la revendication 1 ou 2, **caractérisé en ce que**, au moins pendant une partie de l'étape d'introduction du milieu fluide, l'espace annulaire ou la totalité du câble est obturé de manière étanche à la pression au niveau de l'extrémité distale du câble, de telle sorte que le milieu fluide, sous l'effet de la pression appliquée, entraîne une compression de l'âme du câble et/ou une expansion de la gaine de câble, moyennant quoi on obtient une étape dite étape de compression.

4. Procédé selon les revendications 2 et 3, **caractérisé en ce que** l'on exécute d'abord l'étape de flux et ensuite l'étape de compression.

5. Procédé selon la revendication 4, **caractérisé en ce que** lorsque le milieu fluide sort au niveau de l'extrémité distale du câble l'étape de flux est terminée et l'étape de compression commence.

6. Procédé selon l'une quelconque des revendications 1 à 5, **caractérisé en ce que**, en présence d'un câble dans lequel la chemise de l'âme est réalisée sous forme d'enroulement, l'extrémité proximale du câble est l'extrémité vers laquelle s'étend l'enroulement, de telle sorte que le milieu fluide se déplace vers l'avant dans l'espace annulaire à l'encontre du sens d'enroulement.

7. Procédé selon l'une quelconque des revendications 1 à 6, **caractérisé en ce que**, en présence d'un câble dans lequel la chemise de l'âme est réalisée sous forme d'enroulement, l'âme du câble est extraite au niveau de l'extrémité vers laquelle s'étend l'enroulement, c'est-à-dire que le mouvement de traction est effectué dans le sens de l'enroulement.

8. Procédé selon l'une quelconque des revendications 1 à 7, **caractérisé en ce que**, au moins pendant une partie de l'étape d'introduction du milieu fluide, en particulier pendant une étape de compression, on introduit un gaz comprimé, de préférence de l'air comprimé, à l'intérieur de l'âme du câble entourée par la chemise, moyennant quoi une contre-pression exercée de l'intérieur sur la chemise est générée contre le milieu fluide introduit sous pression.

9. Procédé selon la revendication 8, **caractérisé en ce que**, en présence d'un câble dans lequel la chemise de l'âme est réalisée sous forme d'enroulement, le gaz comprimé, de préférence l'air comprimé, est introduit par l'extrémité du câble à partir de laquelle part l'enroulement, de telle sorte que le gaz comprimé afflue dans le sens de l'enroulement à l'intérieur de l'âme du câble.

10. Procédé selon la revendication 8 ou 9, **caractérisé en ce qu'**un milieu liquide, en particulier une colle, est ajouté dans le gaz comprimé et est ainsi introduit à l'intérieur de l'âme du câble.

11. Procédé selon l'une quelconque des revendications 1 à 10, **caractérisé en ce que** l'intérieur de l'âme du câble au niveau de l'extrémité proximale du câble est obturé de manière étanche à la pression par rapport au milieu fluide à introduire sous pression dans l'espace annulaire, de telle sorte qu'au niveau de l'extrémité proximale du câble le milieu fluide ne peut pas pénétrer à l'intérieur de l'âme du câble.

12. Procédé selon l'une quelconque des revendications 1 à 11, **caractérisé en ce que** l'intérieur de l'âme du câble au niveau de l'extrémité distale du câble est obturé de manière étanche à la pression par rapport à l'espace annulaire, de telle sorte qu'au niveau de l'extrémité distale du câble le milieu fluide sortant de l'espace annulaire ne peut pas pénétrer à l'intérieur de l'âme du câble.

13. Procédé selon la revendication 11 ou 12, **caractérisé en ce que** la fermeture étanche à la pression de l'intérieur de l'âme du câble par rapport à l'espace annulaire est assurée par une fermeture hermétique appliquée étroitement sur l'extrémité de l'âme du câble.

14. Procédé selon la revendication 13, **caractérisé en ce que** la fermeture hermétique de l'âme est munie d'un tube de ventilation pour ventiler l'intérieur de l'âme du câble.

15. Procédé selon l'une quelconque des revendications 1 à 14, **caractérisé en ce que** le milieu fluide est introduit dans le tube de câble avant l'extraction de l'âme.

16. Procédé selon la revendication 15, **caractérisé en ce que** le milieu fluide est introduit dans le tube de câble pendant l'extraction de l'âme du câble.

17. Procédé selon l'une quelconque des revendications 1 à 16, **caractérisé en ce que**, avant l'introduction du milieu fluide, l'intérieur de l'âme du câble est obturé de manière étanche à la pression au niveau des deux extrémités du câble par rapport à l'espace annulaire.

18. Procédé selon l'une quelconque des revendications 1 à 17, **caractérisé en ce que**, avant l'introduction du milieu fluide, l'étanchéité du câble est vérifiée au moyen de l'air comprimé.

19. Procédé selon l'une quelconque des revendications 1 à 18, **caractérisé en ce que**, avant l'introduction du milieu fluide, la pénétrabilité du câble est vérifiée au moyen de l'air comprimé.

20. Procédé selon l'une quelconque des revendications 1 à 19, **caractérisé en ce que** l'âme du câble est mise sous tension pendant l'introduction du milieu fluide.

21. Procédé selon l'une quelconque des revendications 1 à 20, **caractérisé en ce que** l'âme du câble est protégée contre tout mouvement de torsion pendant le processus d'extraction.

22. Procédé selon l'une quelconque des revendications 1 à 21, **caractérisé en ce que** pendant le processus d'extraction l'âme du câble est de préférence tordue dans une direction dans laquelle sont éventuellement enroulées les spires des fils situés dans l'âme du câble.

23. Processus selon l'une quelconque des revendications 1 à 22, **caractérisé en ce que** pendant le processus d'extraction, le milieu fluide est raclé et collecté au niveau de l'extrémité du câble par laquelle est extraite l'âme du câble.

24. Procédé selon l'une quelconque des revendications 1 à 23, **caractérisé en ce que** pendant le processus d'extraction, au niveau de l'extrémité, différente de l'extrémité d'extraction de l'âme du câble, le milieu fluide est entraîné en déplacement par l'âme du câble, par exemple au moyen d'un élément de type piston relié à l'extrémité de l'âme du câble.

25. Procédé selon l'une quelconque des revendications 1 à 24, **caractérisé en ce que** pendant le processus d'extraction, la gaine de câble est protégée de préférence contre toute torsion au niveau de l'extrémité par laquelle est extraite l'âme.

26. Procédé selon l'une quelconque des revendications 1 à 25, **caractérisé en ce que** pendant le processus d'extraction pour favoriser l'extraction de l'âme, du câble, une force de pression est exercée sur l'extrémité de l'âme opposée au côté de traction.

27. Procédé selon la revendication 26, **caractérisé en ce que** la force de pression est appliquée par l'intermédiaire d'un milieu fluide introduit sous l'effet d'une pression exercée sur l'extrémité de l'âme du câble opposée au côté de traction.

28. Procédé selon l'une quelconque des revendications 1 à 27, **caractérisé en ce que** la force de traction est transmise sur l'âme du câble par l'intermédiaire d'une pince qui est fixée contre l'âme du câble.

29. Procédé selon l'une quelconque des revendications 1 à 28, **caractérisé en ce que** la force de traction est exercée sur l'âme du câble par un arbre actionné par un moteur, autour duquel l'âme du câble est enroulée plusieurs fois.

30. Procédé selon l'une quelconque des revendications 1 à 29, **caractérisé en ce que** le milieu fluide introduit contient un lubrifiant additionné.

31. Procédé selon l'une quelconque des revendications 1 à 30, **caractérisé en ce que** le milieu fluide peut être formé lui-même par un lubrifiant.

32. Procédé selon la revendication 30 ou 31, **caractérisé en ce que** le lubrifiant est formé par un liquide thixotropique.

33. Procédé selon l'une quelconque des revendications 1 à 32, **caractérisé en ce que**, en même temps que l'extraction de l'âme, au moins un nouveau câble ou élément similaire est introduit dans la gaine du câble.
